# EUROPÄISCHE PATENTSCHRIFT

(11) **EP 0 549 627 B1**
(45) Veröffentlichungstag und Bekanntmachung des Hinweises auf die Patenterteilung: **08.03.1995**
(21) Anmeldenummer: 91915866.7
(22) Anmeldetag: 09.09.1991
(51) Int. Cl.: C09J 175/04, C09K 3/10

(54) **DICHTUNGS- UND KLEBEMASSE AUF BASIS VON POLYURETHANEN MIT SPEZIELLEN WEICHMACHERN**
SEALING AND ADHESIVE COMPOUNDS WITH SPECIAL PLASTICIZERS
MASSE D'ETANCHEITE ET ADHESIVE A BASE DE POLYURETHANE AVEC DES PLASTIFIANTS SPECIAUX

(30) Priorität: 18.09.1990 DE 4029504
(43) Veröffentlichungstag der Anmeldung: 07.07.1993
(73) Patentinhaber: Henkel Kommanditgesellschaft auf Aktien, 40191 Düsseldorf (DE)
(72) Erfinder: PODOLA, Tore, D-4019 Monheim (DE); MAJOLO, Martin, D-5140 Erkelenz (DE); EMMERLING, Winfried, D-4040 Neuss (DE); UNGER, Lothar, D-4006 Erkrath 2 (DE)
(86) Internationale Anmeldenummer: EP9101710
(87) Internationale Veröffentlichungsnummer: WO9205227

(56) Entgegenhaltungen:
- EP-A- 0 170 865
- EP-A- 0 261 409

## Beschreibung

Die Erfindung betrifft Dichtungs- und/oder Klebemassen auf Basis Von alkoxysilanterminierten Polyurethanen, die Diurethane als Weichmacherkomponente enthalten, sowie ein Verfahren zu ihrer Herstellung und die Verwendung von alkoxysilanterminierten Polyurethanen in Abmischung mit Diurethanen als Dichtungs- und/oder Klebemassen.

Alkoxysilanterminierte, feuchtigkeitshärtende Einkomponenten-Polyurethane werden in zunehmendem Maße als Beschichtungs-, Dichtungs- und Klebemasse im Bauwesen und in der Automobilindustrie verwendet. Bei diesen Anwendungen werden hohe Anforderungen an das Dehn-, Adhäsionsvermögen und an die Aushärtegeschwindigkeit gestellt. Zur Verbesserung des Dehnvermögens, aber auch der Weichheit, Biegsamkeit und Bearbeitbarkeit können diesem System Weichmacher zugesetzt werden. Bislang wurden zu alkoxysilanterminierten Polyurethanen stets die klassischen Weichmacher als einer der üblichen Zusätze beigemengt. So werden in der US 4 555 561 beispielsweise als Weichmacher Phthalate, Benzoate, chlorierte Paraffine oder aromatische Kohlenwasserstoffe bis 20 Gew.-% als Weichmachungsmittel zugesetzt. Als nachteilig an diesen klassischen Weichmachern erweist sich jedoch deren Fähigkeit zur Wanderung (Migration), die durch Diffusion, Dampfdruck und Konvektionsvorgänge zustande kommt und die sich vor allem bei Berührung des alkoxysilanterminierten Polyurethans mit anderen flüssigen oder festen Stoffen bemerkbar machen. So verändern beispielsweise ausgehärtete alkoxysilanterminierte Polyurethane, die mit Lacken oder ähnlichen angestrichen wurden, aufgrund der Auswanderungserscheinungen der klassischen Weichmacher ihr Erscheinungsbild ungünstig.

Aus der DE-OS 37 14 768 sind über NCO-Gruppen aushärtende Polyurethandichtungsmassen mit einem Gehalt an quellbarem PVC-Pulver bekannt, die als zusätzliche Weichmacher (Extender) Diurethane enthalten. Die dort als zusätzliche Weichmacher eingesetzten Diurethane verhindern einerseits die Vernetzungsreaktion der Isocyanatgruppen-terminierten Polyurethane während der Lagerung und begrenzen andererseits das Quellverhalten des PVC. Dementsprechend kann der Fachmann aus der o.g. deutschen Offenlegungsschrift lediglich entnehmen, daß NCO-terminierte Polyurethane, die PVC als Weichmacher enthalten, durch Zusätze an Diurethanen lagerstabiler werden und gleichzeitig das PVC-Quellvermögen limitieren.

Aufgabe der vorliegenden Erfindung war es, Dichtungs- und/oder Klebemassen auf Basis von alkoxysilanterminierten Polyurethanen bereitzustellen, die einen mit alkoxysilanterminierten Polyurethan verträglichen Weichmacher enthalten und wobei dieser die Nachteile der klassischen Weichmacher überwindet.

Gegenstand der vorliegenden Erfindung sind demgemäß bei Raumtemperatur applizierbare, feuchtigkeitshärtende Dichtungs- und/oder Klebemassen enthaltend
- alkoxysilanterminierte Polyurethane, hergestellt durch im wesentlichen vollständige Umsetzung der freien NCO-Gruppen, isocyanatterminierter Polyurethan-Prepolymere mit NCO-reaktiven Gruppen enthaltenen Alkoxysilanen und
- Diurethanen als Weichmacher, hergestellt aus Diolmischungen und monofunktionellen Isocyanaten unter im wesentlichen vollständiger Abreaktion der freien OH-Gruppen oder aus Diisocyanaten und monofunktionellen Alkoholen unter im wesentlichen vollständiger Abreaktion der freien NCO-Gruppen.

Die erfindungsgemäßen feuchtigkeitshärtenden Dichtungs- und/oder Klebemassen enthalten alkoxysilanterminierte Polyurethane und Diurethane als Weichmacher, gegebenenfalls in Abmischung mit weiteren üblichen Zusatzstoffen. Alkoxysilanterminierte Polyurethane werden in an sich bekannter Weise durch Umsetzung von im wesentlichen sämtlicher freier NCO-Gruppen von NCO-terminierten Polyurethan-Prepoly meren mit Alkoxysilanen, die gegenüber Isocyanatgruppen reaktive Reste tragen, erhalten. Die NCO-terminierten Polyurethan-Prepolymeren werden unter Einsatz von OH-terminierten Polyolmischungen und Diisocyanaten gewonnen. Im Rahmen der Erfindung können eine oder mehrere Polyole aus der Gruppe der Polyetherpolyole, Polyesterpolyole, Polyalkylendiole und/oder Polyacetale mit zwei oder mehreren freien OH-Gruppen eingesetzt werden.

Die genannten Polyole und ihre Herstellung sind aus dem Stand der Technik bekannt. So können beispielsweise Polyesterpolyole durch Reaktion von Dicarbonsäuren mit Triolen oder einem Überschuß an Diolen und/ oder Triolen sowie durch Ringöffnung von epoxydierten (Fett-)-Estern mit Alkoholen hergestellt werden. Auch Polycaprolactondiole, herstellbar aus ε-Caprolacton und Diolen, sind als Polyesterpolyole geeignet. Im Rahmen der Erfindung werden Polyesterpolyole bevorzugt aus niedermolekularen Dicarbonsäuren wie Adipinsäure, Isophthalsäure, Terephthalsäure und Phthalsäure mit einem Überschuß an Diolen mit 2 - 12 Kohlenstoffatomen, Trimethylolpropan und/oder Glycerin. Als Polyacetale seien beispielsweise die Polykondensationsprodukte aus Formaldehyd und Diolen und/oder Polyolen in Gegenwart saurer Katalysatoren genannt. Polyalkylendiole wie beispielsweise Polybutadiendiol sind käufliche Produkte, die in verschiedenen Molekulargewichten erhältlich sind. Polyetherpolyole können beispielsweise durch Co- oder Blockpolymerisation von Alkylenoxiden wie Ethylenoxid, Propylenoxid und Butylenoxid oder durch Umsetzung von Polyalkylenglykolen mit 2 oder 3 funktionellen Alkoholen erhalten werden. Aber auch die polymerisierten Ringöffnungsprodukte von Tetrahydrofuran mit Alkoholen sind als Polyetherpolyole geeignet. Entsprechend einer bevorzugten Ausführungsform in der vorliegenden Erfindung werden Alkoxylierungs-, insbesondere Ethoxylierungs- und/oder Propoxylierungsprodukte di- oder trifunktioneller Alkohole aus der von Ethylenglykol, Diethylenglykol, Triethylenglykol, 1,2-Propandiol, Dipropylenglykol, den Butandiolen, Hexandiolen, Octandiolen, technische Gemische von Hydroxyfettalkoholen mit 14 - 22 C-Atomen, insbesondere Hydroxystearylalkohol, Trimethylolpropan und Glycerin gebildeten Gruppe eingesetzt. Bevorzugt im Rahmen der Erfindung werden Polyole mit einem mittleren Molekulargewicht von 300 bis 6000 und insbesondere von 500 bis 4000. Ganz besonders bevorzugt werden Mischungen von OH-terminierten, linearen Polyolen und insbesondere solche Polyolmischungen, die wenigstens anteilsweise Polypropylenglykol mit einem Molekulargewicht von 1000 bis 6000 enthalten. Vorzugsweise enthalten die Mischungen der OH-terminierten Polyole Polypropylenglykol mit einem mittleren Molekulargewicht von 1000 bis 6000 in Mengen über 50 Gew.-%, vorzugsweise über 70 Gew.-% bis 100 Gew.-% - bezogen auf Polyolmischung. Selbstverständlich können auch Mischungen von Polypropylenglykol mit verschiedenen Molekulargewichten eingesetzt werden. Um nach der Aushärtung der alkoxysilanterminierten Polyurethane für die Praxis genügend hohe Festigkeitswerte zu erhalten, sollte der Anteil an Polypropylenglykol mit hohen Molekulargewichten beschränkt sein. Vorzugsweise enthalten die Mischungen von Polypropylenglykol mit verschiedenen Molekulargewichten, Polypropylenglykol mit Molekulargewichten über 4000 unter 75 Gew.-% - bezogen auf Polyolmischung.

Eine Ausführungsform der vorliegenden Erfindung entsprechend werden die OH-terminierten Polyole mit Diisocyanaten zu NCO-terminierten Polyurethan-Prepolymeren mit einer mittleren NCO-Funktionaltät von mindestens 2 umgesetzt. Als Diisocyanate kommen aromatische Diisocyanate wie 2,4- und 2,6-Toluoldiisocyanat, 1,5-Naphthalindiisocyanat, 4,4-Diphenylmethandiisocyanat, 3,3-Dimethoxy-4,4-Diphenylisocyanat und/oder Xylylendiisocyanate in Betracht. Beispiele für aliphatische Diisocyanate sind 1,4-Tetramethylendiisocyanat, 1,6-Hexamethylendiisocyanat, Decan 1,10-diisocyanat, 2,2,4-Trimethylhexamethylendiisocyanat, Dicyclohexylmethandiisocyanat, Tetramethylenxylylendiisocyanate, Isophorondiisocyanat und/oder die technischen Isocyanate, welche bei der Phosgenierung aus den Aminen erhältlich sind, die durch Hydrieren von Dimerfettsäurenitrilen anfallen. Für die Anwendungsbereiche, in denen die alkoxysilanterminierten Polyurethane Silicone ersetzen sollen, empfehlen sich aliphatische Diisocyanate und insbesondere Trimethylhexamethylendiisocyanat.

Entsprechend einer zweiten Ausführungsform der vorliegenden Erfindung werden NCO-terminierten Polyurethan-Prepolymeren mit einer mittleren NCO-Funktionalität von mindestens 1 und weniger als 2 mit Alkoxysilanen umgesetzt. Die entsprechenden NCO-terminierten Polyurethane mit einer mittleren NCO-Funktionalität von mindestens 1 und weniger als 2 können auf zwei verschiedene Weisen erhalten werden:
a) Polyurethan-Prepolyere mit einer mittleren NCO-Funktionalität von mindestens 2 werden anschließend mit linearen oder verzweigten aliphatischen monofunktionellen Alkoholen mit 1 bis 18 C-Atomen und/oder Monoalkylpolyetheralkoholen zu einem Polyurethan-Prepolymer mit einer mittleren NCO-Funktionalität von mindestens 1 und weniger als 2, oder
a') OH-terminierte Polyole werden mit einem Gemisch von Mono- und Diisocyanaten zu NCO-terminierten Polyurethan-Prepolymeren mit einer mittleren NCO-Funktionalität von mindestens 1 und weniger als 2 umgesetzt.

Die in der Verfahrensvariante a) mitverwendeten linearen oder verzweigten aliphatischen, monofunktionellen Alkohole sind insbesondere Methanol, Ethanol, Isomere des Propanols, Butanols und/oder Hexanols sowie Fettalkohole mit 8 bis 18 C-Atomen wie Octanol, Decanol, Dodecanol, Tetradecanol, Hexadecanol und/oder Octadecanol. Die Fettalkohole sind beispielsweise durch Reduktion von natürlichen Fettsäuren erhältlich und können sowohl als Reinsubstanzen als auch in Form ihrer technischen Gemische eingesetzt werden. Bevorzugt werden lineare Monoalkohole und insbesondere solche mit 4 - 18 C-Atomen, da die niederen Alkohole sich nur schwer wasserfrei herstellen lassen. Anstelle der linearen oder verzweigten aliphatischen Alkohole oder in Abmischung mit diesen sind auch Monoalkylpolyetheralkohole unterschiedlichen Molekulargewichts, vorzugsweise in den Molekulargewichtsbereichen von 1000 - 2000, einsetzbar. Ganz besonders bevorzugt wird Monobutylpropylenglykol alleine oder in Abmischung mit aliphatischen linearen Alkoholen mit 4 - 18 C-Atomen.

Die nach Verfahrensvariante a') in Abmischung mit den oben bereits beschriebenen Diisocyanate eingesetzten Monoisocyanate sind vorzugsweise aromatische Monoisocyanate wie Phenylisocyanat, Toluylenisocyanat und/oder Naphthylenisocyanat.

Die nach der ersten Ausführungsform erhaltenen Polyurethan-Prepolymere mit einer NCO-Funktionalität von mindestens 2 ergeben nach ihrer Umsetzung mit Alkoxysilanen relativ harte Dichtungs- und Klebemassen. Vorzugsweise weisen diese Polyurethan-Prepolymere eine mittlere NCO-Funktionalität von 2 bis 2,5 auf. Höhere NCO-Funktionalitäten der Polyurethan-Prepolymere ergeben stark vernetzte und so hoch viskose Produkte, die in der Praxis kaum noch handhabbar sind.

Die nach der zweiten Ausführungsform erhaltenen Polyurethan-Prepolymere mit einer mittleren NCO-Funktionalität von mindestens 1 und weniger als 2 ergeben weich-elastische Dichtungs- und/oder Klebemassen. Je kleiner die NCO-Funktionalität der NCO-terminierten Polyurethan-Prepolymeren ist, desto weicher lassen sich die ausgehärteten silanisierten Endprodukte einstellen. Zweckmäßigerweise liegt daher das Zahlenmittel der NCO-Funktionalität der NCO-terminierten Polyurethan-Prepolymeren bei diesen zwischen 1,2 und 1,8.

Die nach beiden Ausführungsformen und nach beiden Verfahrensvarianten erhaltenen NCO-terminierten Polyurethan-Prepolymeren werden mit Alkoxysilanen, die gegenüber Isocyanatgruppen reaktive Reste aufweisen, umgesetzt, wobei im wesentlichen sämtliche freie NCO-Gruppen der Polyurethan-Prepolymeren abreagieren. Als Alkoxysilane eignen sich prinzipiell solche, die in der reaktiven Gruppe einen reaktiven Wasserstoff oder eine Epoxygruppe aufweisen. Vorzugsweise werden Alkoxysilane der allgemeinen Formel 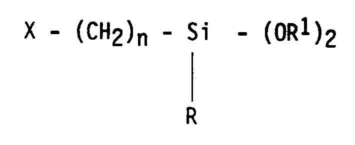
in der
- X =: SH, NHR², 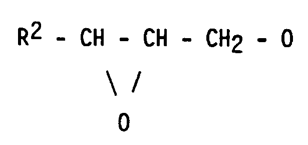 und/oder (NH - CH₂ - CH₂)ₘ - NHR²
- R =: - CH₃, - CH₂H₅ und/oder OR¹
- R¹ =: ein ggf. substituierter aliphatischer, cycloaliphatischer und/oder aromatischer Kohlenwasserstoffrest mit 1 bis 10 C-Atomen
- R² =: H und/oder ein ggf. substituierter aliphatischer, cycloaliphatischer und/oder aromatischer Kohlenwasserstoffrest mit 1 bis 10 C-Atomen
- n =: 2 bis 6
- m =: 1 oder 2
eingesetzt.

Die Alkoxysilane der vorstehenden Formel sind an sich bekannte Produkte. Die Herstellung der Aminoalkylalkoxysilane und der N-(aminoalkyl)aminoalkylalkoxysilane wird in den französischen Patenten 11 40 301, 11 89 988, 12 17 009 und 12 54 063 sowie in der Monographie "Silan Cuppling Agents" von Plueddemann, Plenum Press, New York (1982), S. 29 - 45, beschrieben. In der Regel werden aminoorganofunktionelle Alkoxysilane durch Umsetzung von Haloalkylalkoxysilanen mit Ammoniak bzw. Aminen oder durch Hydrierung von Cyanoalkylalkoxysilanen gewonnen. Mercaptoalkylalkoxysilane werden beispielsweise durch Umsetzung von Chloroalkylalkoxysilane und Ammoniumsalzen von Schwefelstoff erhalten. Epoxyalkylalkoxysilane werden ebenfalls in der Monographie von Plueddemann beschrieben und sind beispielsweise erhältlich durch Addition von Alkoxysilanen an ungesättigte Epoxide oder durch Epoxidierung von Alkylenalkoxysilanen.

Im Rahmen der Erfindung können gleiche oder verschiedene Alkoxysilane der 0.9. Formel eingesetzt werden. Aufgrund ihrer leichten Zugänglichkeit werden vorzugsweise Mercaptoalkylalkoxysilane und/oder Aminoalkylalkoxysilane eingesetzt. Von den Aminoalkylalkoxysilanen eignen sich insbesondere: (β-aminoethyl)trimethoxysilan, ( 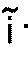 -aminopropyl)trimethoxysilan, (β-aminoethyl)methyldimethoxysilan, ( 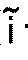 -aminopropyl)methyldimethoxysilan, (β-aminomethyl)trimethoxysilan, ( 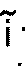 -aminopropyl)triethoxysilan, (β-aminoethyl)methyldiethoxysilan und/oder ( 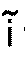 -aminopropyl)methyldiethoxysilan. Aus der Gruppe der Mercaptoalkylalkoxysilane werden bevorzugt Mercaptoethyltrimethoxysilan, Mercaptopropyltrimethoxysilan, Mercaptoethylmethyldimethoxysilan, Mercaptopropyltriethoxysilan, Mercaptoethylmethyldiethoxysilan und/oder Mercaptopropylmethyldiethoxysilan.

Über die Reste R und R¹ der Alkylalkoxysilane lassen sich die Reaktivitäten der alkoxysilanterminierten Polyurethane steuern. Besonders gute Reaktivitäten werden erhalten, wenn der Rest R Bedeutung OR¹ inne hat, d.h. wenn es sich um Trialkoxysilane handelt, die zudem über eine gegenüber den Isocyanatgruppen reaktiven Rest verfügen. Zudem kann die Reaktivität über die Alkoxygruppe OR¹ weiter gesteuert werden. So lassen sich die bevorzugten Amino- und/oder Mercaptoalkylalkoxysilane bedeutend schneller aushärten, wenn der Rest R¹ ein aliphatischer, kurzkettiger Kohlenwasserstoffrest ist. Ganz besonders bevorzugt werden daher Mercaptoethyltrimethoxysilan, Mercaptopropyltrimethoxysilan, (β-aminoethyl)trimethoxysilan und/oder ( 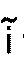 -aminopropyl)trimethoxysilan.

Entsprechend einer weniger bevorzugten Ausführungsform der vorliegenden Erfindung können in Abmischung mit den Alkoxysilanen der allgemeinen Formel auch weitere Alkoxysilane mit gegenüber den Isocyanatgruppen reaktive Reste mit den Polyurethan-Prepolymeren umgesetzt werden. So können die in der Monographie Plueddemanns aufgeführten Aminophenylalkoxysilane, Carboxy und/oder Hydroxy-modifizierte Alkoxysilane in geringen Mengen, vorzugsweise unter 20 Gew.-% - bezogen auf Alkoxysilane - eingesetzt werden.

Die Umsetzung der NCO-terminierten Polyurethan-Prepolymeren mit den Alkoxysilanen erfolgt vorzugsweise in Anwesenheit von Katalysatoren, wie sie Z. B. aus der US 36 27 722 bekannt sind. Bevorzugt werden als Katalysatoren Zinn und/oder Titanverbindungen, insbesondere Dibutylzinndilaurat.

Erfindungsgemäß enthalten die feuchtigkeitshärtenden Dichtungs- und/oder Klebemassen außer alkoxysilanterminierten Polyurethane Diurethane als Weichmacher. Diurethane sind an für sich bekannte Verbindungen, die entweder durch Umsetzung von OH-terminierten Diolen und monofunktionellen Isocyanaten unter Abreaktion im wesentlichen sämtlicher freier Hydroxylgruppen oder durch Umsetzung von Diisocyanaten und monofunktionellen Alkoholen unter Abreaktion im wesentlichen sämtlicher freier NCO-Gruppen hergestellt werden. Zur Herstellung der Diurethane auf Basis von Diolen können Diole mit 2 bis 22 C-Atomen wie z.B. Ethylenglykol, Propylenglykol, 1,2-Propandiol, Dibutandiol, Hexandiol, Octandiol, technische Gemische von Hydroxyfettalkoholen mit 14 C-Atomen, insbesondere Hydroxystearylalkohol, eingesetzt werden. Bevorzugt werden lineare Diolmischungen und insbesondere solche, die Polypropylenglykol mit einem mittleren Molekulargewicht von 1000 bis 6000 in Mengen über 50 Gew.-%, vorzugsweise über 70 Gew.-% enthalten. Ganz besonders bevorzugt werden Diurethane ausschließlich auf Basis von Polypropylenglykol mit gleichen oder verschiedenen mittleren Molekulargewichten von 1000 bis 4000. Die freien Hydroxylgruppen der Diolmischungen werden im wesentlichen sämtlich mit aromatischen und/oder aliphatischen Monoisocyanaten abreagiert. Bevorzugt werden aromatische Monoisocyanate wie Phenylisocyanat und/oder Toluylenisocyanat.

Zur Herstellung der Diurethane auf Basis von Diisocyanaten werden aromatische und/oder aliphatische Diisocyanate eingesetzt. Als aromatische und/oder aliphatische Diisocyanate sind beispielsweise solche geeignet, die bereits bei der Herstellung der Polyurethan-Prepolymeren beschrieben worden sind, vorzugsweise Toluyldiisocyanat. Die freien NCO-Gruppen der Diisocyanate werden im wesentlichen vollkommen mit monofunktionellen Alkoholen, vorzugsweise linearen monofunktionellen Alkoholmischungen umgesetzt. Besonders geeignet sind lineare monofunktionelle Alkoholmischungen. Geeignete Monoalkohole sind beispielsweise solche mit 1 bis 24 C-Atomen wie Propanol, Butanol, Hexanol, Octanol, Decanol, Dodecanol. Geeignet sind desweiteren technische Gemische von mit Alkoholen sowie Polyalkylenglykolmonoalkylether. Insbesondere geeignet sind solche Alkoholmischungen, die Polypropylenglykolmonoalkylether mit einem mittleren Molekulargewicht von 500 bis 2000 in Mengen über 50 Gew.-%, vorzugsweise über 70 Gew.-% - bezogen auf Alkoholmischung - enthalten. Insbesonders bevorzugt werden Diurethane auf Basis von Diisocyanaten, deren freien NCO-Gruppen vollständig mittels Polypropylenglykolmonoalkylether mit einem mittleren Molekulargewicht von 500 bis 2000 umgesetzt worden sind.

Die erfindungsgemäßen Dichtungs- und Klebemassen enthalten
- in Mengen von 20 bis 50 Gew.-%, vorzugsweise von 25 bis 45 Gew.-% alkoxysilanterminierte Polyurethane
- in Mengen von 5 bis 50 Gew.-%, vorzugsweise von 10 bis 40 Gew.-% Diurethane
- in Mengen von 0 bis 75 Gew.-%, vorzugsweise von 10 bis 80 Gew.-% übliche Zusatzstoffe - jeweils bezogen auf Anwendungsmasse -.

Je nach Anwendungszweck schwanken die Zusatzmengen der üblichen Zusatzstoffe sowie ihre Zusammensetzung. In der Regel werden als übliche Zusatzstoffe Pigmente, Füllstoffe, Härtungskatalysatoren, Farbstoffe, Verdickungsmittel, Haftvermittler, Streckmittel und UV-Stabilisatoren beigemengt. Selbstverständlich können neben den beschriebenen Diurethanen handelsübliche Weichmacher wie Phthale als Zusatzstoffe beigemengt werden, wobei jedoch dadurch die verbesserte Anstrichverträglichkeit je nach Zugabemenge an handelsüblichen Weichmachern sinkt. Dementsprechend sind Zugaben an handelsüblichen Weichmachern wenig bevorzugt. Als Füllstoffe eignen sich gegebenüber Isocyanate inerte anorganische Verbindungen, wie z. B. Kreide, Kalkmehl, gefällte und/oder pyrogene Kieselsäure, Aluminiumsilikate, gemahlene Mineralstoffe sowie andere dem Fachmann geläufige anorganische Füllstoffe. Zudem können auch organische Füllstoffe eingesetzt werden, insbesondere Faserkurzschnitte und dergleichen. Für einige Anwendungsgebiete werden Füllstoffe bevorzugt, die den Zubereitungen Thixotropie verleihen, wie z. B. quellbare Kunststoffe. Die Einsatzmengen der üblichen Zusatzstoffe bewegen sich in Mengenbereichen, die für den Fachmann geläufig sind.

Zur Beschleunigung der Härtung können organische oder anorganische Verbindungen, wie z. B. Dibutylzinndiacetat, Dibutylzinndilaurat und/oder Tetrabutyldioleatodistannoxan in geringen Mengen als Katalysatoren zugegeben werden. Zur Beschleunigung der Aushärtung können neben den Aushärtungskatalysatoren noch geringe Anteile an Aminen wie (β-aminoethylaminopropyl)trimethoxysilan und/oder Laurylamin zugegeben werden. Über die Zusatzmenge an Härtungskatalysatoren und ggf. Aminen läßt sich die Aushärtungsgeschwindigkeit in weiten Bereichen entsprechend den Anwendungsgebieten einstellen.

Ein weiterer Gegenstand der vorliegenden Erfindung ist ein Verfahren zur Herstellung von alkoxysilanterminierten Polyurethanen und Weichmacher enthaltenden, feuchtigkeitshärtenden Dichtungs- und/oder Klebemassen. Gemäß vorliegender Erfindung werden zu den vorgelegten Diurethanen, die aus Diolmischungen und monofunktionellen Isocyanaten unter Abreaktion im wesentlichen sämtlicher freier OH-Gruppen oder aus Diisocyanaten und monofunktionellen Alkoholen unter Abreaktion im wesentlichen sämtlicher freier NCO-Gruppen hergestellt worden sind, alkoxysilanterminierte Polyurethane, die durch Umsetzung von im wesentlichen sämtlicher freier NCO-Gruppen von NCO-terminierten Polyurethan-Prepolymeren und Alkoxysilanen hergestellt worden sind, unter Rühren zugesetzt, vorzugsweise bei Temperaturen von 15 bis 80°C.

Gegebenenfalls kann anschließend die Zugabe der üblichen Zusatzstoffe erfolgen.

Ein weiterer Gegenstand der vorliegenden Erfindung ist die Verwendung von alkoxysilanterminierten Polyurethanen und Diurethanen enthaltenden Mischungen als feuchtigkeitshärtende Dichtungsmasse
und/oder Klebemasse, ggf. unter Mitverwendung von üblichen Zusatzstoffen. Vorzugsweise werden die alkoxysilanterminierten Polyurethane und Diurethane enthaltenden Mischungen als Fugendichtungsmassen verwendet. Die weichelastischen Fugendichtungsmassen, deren alkoxysilanterminierte Polyurethane aus NCO-terminierten Polyurethan-Prepolymeren mit einer mittleren NCO-Funktionalität von mindestens 1 und weniger als 2 aufgebaut worden sind, werden bevorzugt im Bau für Anschlußfugen verwendet. Die harten Fugendichtungsmassen, deren alkoxysilanterminierte Polyurethane aus NCO-terminierten Polyurethan-Prepolymeren mit einer mittleren NCO-Funktionalität von wenigstens 2 aufgebaut worden sind, werden bevorzugt bei der Konstruktionsklebung und in der Spiegelverklebung verwendet.

### Beispiele

### A) Herstellung der alkoxysilanterminierten Polyurethane

### Beispiel 1

Es wurden 1000 Teile (= 1 Äquivalent) Polypropylenglykol mit einem mittleren Molekulargewicht von 2000 und 113,1 Teile (= 1,3 Äquivalente) Toluylendiisocyanat (TDI) zusammen mit 0,6 Teilen Dibutylzinndilaurat bei 90°C unter Rühren zu einem NCO-terminierten Prepolymeren umgesetzt. Nach 2 Stunden war der theoretische Wert von 1,13 % NCO-Gruppen erreicht. Es wurde auf 60°C abgekühlt und 53,7 Teile (= 0,3 Äquivalente) Aminopropyltrimethoxysilan so zugegeben, das 80°C nicht überschritten wurde und 30 min weitergerührt. Der NCO-Gehalt des alkoxysilanterminierten Polyurethans war kleiner 0,03 %. Die Viskosität des Produkts betrug bei 25°C 210.000 mPas nach Brookfield.

### Beispiel 2

Analog Beispiel 1 wurden 500 Teile (= 0,5 Äquivalente) Polypropylenglykol mit einem mittleren Molekulargewicht von 2000 und 1000 Teile (= 0,5 Äquivalente) Polypropylenglykol mit einem mittleren Molekulargewicht von 4000 sowie 136,5 Teile (= 1,3 Äquivalente) Trimethylhexamethylendiisocyanat (TMDI) zusammen mit 0,83 Teilen Dibutylzinndilaurat bei 100°C unter Rühren umgesetzt. Nach 5 Stunden wurde auf 60°C abgekühlt und 53,7 Teile (= 0,3 Äquivalente) Aminopropyltrimethoxysilan so langsam zugegeben, daß 80°C nicht überschritten wurde. Es wurde noch ca. 30 Minuten weiter gerührt. Der danach gemessene NCO-Wert des alkoxysilanterminierten Polyurethans war kleiner 0,03 %. Die Viskosität des Produkts betrug bei 25°C 80.000 mPas nach Brookfield.

### Beispiel 3

Analog Beispiel 1 wurden 1000 g (= 1 Äquivalent) Polypropylenglykol mit einem mittleren Molekulargewicht von 2000 und 136,5 Teile (= 1,3 Äquivalente) Trimethylhexamethylendiisocyanat zusammen mit 0,5 Teilen Dibutylzinndilaurat bei 90°C unter Rühren umgesetzt. Nach 4 Stunden war der theoretische NCO-Wert von 1,11 % erreicht. Anschließend wurde auf 650°C abgekühlt und 53,7 Teile Aminopropyltrimethoxysilan (= 0,3 Äquivalente) so langsam zugegeben, daß 80°C nicht überschritten wurde. Anschließend wurden 30 Minuten weiter gerührt. Der NCO-Gehalt des alkoxysilanterminierten Polyurethans war kleiner als 0,03 %. Die Viskosität des Produkts betrug bei 25°C 115.000 mPas nach Brookfield.

### B) Herstellung der Diurethane

### Beispiel 4

In einem heizbaren Rührwerk wurden 450 Gew.-Teile Polypropylenglykol mit einem mittleren Molekulargewicht von 2000, 53,6 Teile Phenylisocyanat und 0,05 Gew.-Teile Dibutylzinndilaurat bei 100°C unter N₂-Atmosphäre gerührt. Die Reaktion wurde durch Bestimmung des NCO-Gehalts gefolgt. Sobald kein freies NCO mehr nachgewiesen werden konnte (ca. 6 Stunden), wurde die Reaktion abgebrochen. Die Viskosität der Diurethane betrug 3000 mPa.s nach Brookfield bei 25°C.

### Beispiel 5

Analog Beispiel 4 wurden 552 Gew.-Teile Polypropylenglykolmonobutylether mit einem mittleren Molekulargewicht von 1000, 62,5 Gew.-Teile 4,4'-Diphenylmethandiisocyanat und 0,06 Gew.-Teile Butylzinndilaurat umgesetzt. Die Viskosität des Diurethans betrug bei 25°C 4000 mPa.s nach Brookfield.

### C) Formulierung der Dichtungsmassen

Die im folgenden angegebenen Teile sind jeweils Gewichtsteile.

### Beispiel 6

In einem Vakuum-Planetendissolver wurden 29 Teile des alkoxysilanterminierten Polyurethans nach Beispiel 1 mit 16 Teilen des Diurethans nach Beispiel 5, 3 Teilen Vinyltrimethoxysilan und 2,1 Teilen Xylol bei Zimmertemperatur verrührt. Die Masse wurde mit 42 Teilen Kreide, 6 Teilen Titandioxid, 0,3 Teilen Benztriazol (UV-Absorber), 0,3 Teilen Tinuvin-765 (sterisch gehinderte Amin als Antioxidans) versetzt und unter Vakuum (25 mbar) bei 2000 bis 3000 UpM solange gerührt, bis eine homogenen glatte Masse entstand. Die Paste wurde abschließend mit 0,2 Teilen 1-Dodecylamin, 1 Teil Aminotrimethoxysilan (= Trocknungsmittel) und 0,1 Teilen Dibutylzinndilaurat unter Vakuum verrührt und in eine Kartusche abgefüllt. Die Eigenschaften der Dichtungsmasse sind der Tabelle 1 zu entnehmen.

### Beispiel 7

Analog Beispiel 6 wurden 35 Teile des alkoxysilanterminierten Polyurethans nach Beispiel 2 mit 10 Teilen des Diurethans nach Beispiel 4, 3,7 Teilen Vinyltrimethoxysilan und 3,4 Teile Xylol verrührt. Zu der Masse wurde im Vakuumplanetendissolver 39 Teile Kreide, 2,8 Teile Titandioxid, 0,3 Teile Benztriazol, 0,3 Teile Tinuvin-765, 0,05 Teile Ruß und 1,15 Teile Eisenoxid versetzt und unter Vakuum (25 mbar) gerührt. Abschließend wurde die Masse mit 0,2 Teilen 1-Dodecylamin, 1 Teil Aminotrimethoxysilan und 0,1 Teilen Dibutylzinndilaurat unter Vakuum verrührt und in eine Kartusche abgefüllt. Die Eigenschaften der Masse sind Tabelle 1 zu entnehmen.

### Beispiel 8

Analog Beispiel 6 wurden im Vakuumplanetendissolver 28 Teile des alkoxysilanterminierten Polyurethans nach Beispiel 3 mit 16 Teilen des Diurethans nach Beispiel 4, 3,7 Teilen Vinyltrimethoxysilan und 1,31 Teile Xylol bei Zimmertemperatur verrührt. Die Masse wurde dann mit 43 Teile Kreide, 6 Teile Titandioxid, 0,3 Teile Benztriazol und 0,3 Teile Tinuvin-765 unter Vakuum (25 mbar) verrührt. Abschließend wurden zu der Masse 0,2 Teile 1-Dodecylamin, 1 Teil Aminotrimethoxysilan und 0,1 Teile Dibutylzinndilaurat zugegeben, unter Vakuum verrührt und die Masse in eine Kartusche abgefüllt. Die Eigenschaften der Masse sind Tabelle 1 zu entnehmen.

**Tabelle 1**

| | Beispiel 6 | Beispiel 7 | Beispiel 8 |
|---|---|---|---|
| Hautbildung (min) | 20 | 50 | 30 |
| E-50 Modul (N/mm²) | 1,8 | 0,4 | 1,5 |
| Bruchdehnung (%) | 60 | 60 | 60 |
| Lagerstabilität (Monate) | 6 | 9 | 6 |

Die Meßmethoden sind der DIN 18540 entnommen. Bestimmung des E-Moduls nach DIN 52455. Die Hautbildungszeit wurde durch sensitive Prüfung bestimmt, wobei die Masse in Raupenform (⌀ 1 cm, Länge 15 cm) aufgespritzt war und unter klimatisierten Bedingungen (23°C, 50 % Luftfeuchte) aushärten konnte.

### Vergleichsbeispiel 1

### Einfluß der Diurethane auf die Anstrichverträglichkeit

Analog dem Beispiel 6 wurde eine Fugendichtungsmasse auf Basis von alkoxysilanterminierten Polyurethanen nach Beispiel 1 hergestellt. Im Unterschied zu Beispiel 6 wurden anstelle des Diurethans 16 Teile eines gewöhnlichen Weichmachers d.h. Phthalsäureoctylbenzylester (Santicizer-261^{R}) der Firma Monsanto in die Masse eingearbeitet. Der Unterschied in der Anstrichverträglichkeit ist Tabelle 2 zu entnehmen.

### Vergleichsbeispiel 2

### Synergistischer Effekt von alkoxysilanterminierten Polyurethanen und Diurethanen

Das Diurethan aus Beispiel 5 wurde anstelle mit einem alkoxysilanterminierten Polyurethan mit einem NCO-terminierten Polyurethan, welches quellfähiges PVC enthält, gemäß der DE 37 14 678 (Beispiel 2) hergestellt. Der Unterschied in der Anstrichverträglichkeit ist ebenfalls Tabelle 2 zu entnehmen.

**Tabelle 2**

| Fugendichtmassen | Bondex-BBZ^{R} Acryllack weiß | Adler, wasserverd. Acryllack rot | Gori Fensterlasur^{R} teak | Büchner Flüssigkunststoff^{R} betongrau |
|---|---|---|---|---|
| Beispiel 6 | 1 | 2 | 1-2 | 3 |
| Vergleichsbeispiel 1 | 4-5 | 4-5 | 4 | 5-6 |
| Vergleichsbeispiel 2 | 3 | 5 | 3 | 5-6 |

### Bestimmung nach Methode Arge

Die Prüfung der Anstrichverträglichkeit erfolgte analog der von der Arbeitsgemeinschaft der Fachgemeinschaft Dichtstoffmassenhersteller des Maler- und Lackierhandwerks und der Lackindustrie empfohlenen Methode (siehe "Das Maler- und Lackierhandwerk" Nr. 7, 1983 Sonderdruck S. 6-8). Bewertet mit Noten wurden Verlaufstörung, klebrige Oberfläche, Haftung des ausgehärteten Films am Untergrund, Runzelbildung im ausgehärteten Film und Verfärbung. Die Durchschnittsnoten der einzelnen Bewertungsnoten sind in Tabelle 2 aufgenommen. Die mit 1 bewerteten Massen sind geeignet, die mit 5-6 bewerteten dagegen eher schlecht geeignet.

## Patentansprüche

1. Bei Raumtemperatur applizierbare, feuchtigkeitshärtende Dichtungs- und/oder Klebemassen enthaltend
- alkoxysilanterminierte Polyurethane, hergestellt durch im wesentlichen vollständige Umsetzung der freien NCO-Gruppen isocyanatterminierter Polyurethan-Prepolymere mit NCO-reaktiven Gruppen enthaltenen Alkoxysilanen und
- Diurethane als Weichmacher, hergestellt aus
a) Diolmischungen und monofunktionellen Isocyanaten unter im wesentlichen vollständiger Abreaktion der freien OH-Gruppen oder
b) Diisocyanaten und monofunktionellen Alkoholen unter im wesentlichen vollständiger Abreaktion der freien NCO-Gruppen.

2. Dichtungs- und Klebemassen nach Anspruch 1, dadurch gekennzeichnet, daß sie alkoxysilanterminierte Polyurethane in Mengen von 20 bis 50 Gew.-%, vorzugsweise von 25 bis 45 Gew.-%, und Diurethane in Mengen von 5 bis 50 Gew.-%, vorzugsweise von 10 bis 40 Gew.-%, und weitere übliche Zusatzstoffe in Mengen von 0 bis 75 Gew.-%, vorzugsweise von 10 bis 80 Gew.-% - jeweils bezogen auf Anwendungsmasse - enthalten.

3. Dichtungs- und Klebemassen nach einem der Ansprüche 1 oder 2, dadurch gekennzeichnet, daß sie als Weichmacher Diurethane enthalten, die hergestellt worden sind aus
a) linearen Diolmischungen, die Polypropylenglykol mit einem mittleren Molekulargewicht von 1000 bis 6000 in Mengen über 50 Gew.-%, vorzugsweise über 70 Gew.-%, enthalten und aromatischen und/oder aliphatischen Monoisocyanaten oder
b) linearen Monoalkoholmischungen, die Polypropylenglykolmonoalkylether mit einem mittleren Molekulargewicht von 500 bis 2000 in Mengen über 50 Gew.-%, vorzugsweise über 70 Gew.-% enthalten und aromatischen und/oder aliphatischen Diisocyanaten.

4. Dichtungs- und Klebemassen nach einem der Ansprüche 1 bis 3, dadurch gekennzeichnet, daß die enthaltenen alkoxysilanterminierten Polyurethane hergestellt worden sind durch Umsetzung von Alkoxysilanen mit NCO-terminierten Polyurethan-Prepolymeren mit einer mittleren NCO-Funktionalität von mindestens 2, erhalten aus OH-terminierten Polyolmischungen und Diisocyanaten.

5. Dichtungs- und Klebemassen nach einem der Ansprüche 1 bis 3, dadurch gekennzeichnet, daß die enthaltenen alkoxysilanterminierten Polyurethane hergestellt worden sind durch Umsetzung von Alkoxysilanen und NCO-terminierten Polyurethan-Prepolymeren mit einer mittleren NCO-Funktionalität von mindestens 1 und weniger als 2, erhalten aus
a) Umsetzung von OH-terminierten Polyolmischungen mit Diisocyanaten zu NCO-terminierten Polyurethan-Prepolymeren mit einer mittleren NCO-Funktionalität von mindestens 2 und Umsetzung eines Teils der NCO-Gruppen mit linearen oder verzweigten aliphatischen monofunktionellen Alkoholen mit 1 bis 18 C-Atomen und/oder Monoalkylpolyetheralkoholen zu einem Polyurethan-Prepolymeren mit einer mittleren NCO-Funktionalität von mindestens 1 und weniger als 2, oder
a') Umsetzung von OH-terminierten Polyolmischungen mit einem Gemisch von Mono- und Diisocyanaten zu NCO-terminierten Polyurethan-Prepolymeren mit einer mittleren NCO-Funktionalität von mindestens 1 und weniger als 2.

6. Dichtungs- und Klebemassen nach einem der Ansprüche 1 bis 5, dadurch gekennzeichnet, daß die NCO-terminierten Polyurethan-Prepolymeren hergestellt worden sind aus linearen OH-terminierten Polyolmischungen, die wenigstens anteilsweise Polypropylenglykol mit einem mittleren Molekulargewicht von 1000 bis 6000, vorzugsweise in Mengen über 50 Gew.-%, enthalten.

7. Dichtungs- und Klebemassen nach einem der Ansprüche 1 bis 6, dadurch gekennzeichnet, daß sie alkoxysilanterminierte Polyurethane enthalten, hergestellt durch Umsetzung von im wesentlichen sämtlicher freier NCO-Gruppen der NCO-terminierten Polyurethan-Prepolymere mit Alkoxysilanen der allgemeinen Formel 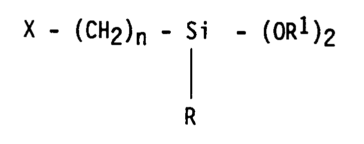 in der
X = SH, NHR², 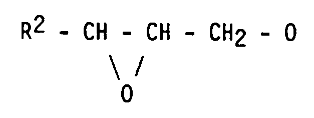 und/oder (NH - CH₂ - CH₂)ₘ - NHR²
R = - CH₃, - CH₂H₅ und/oder OR¹
R¹ = ein ggf. substituierter aliphatischer, cycloaliphatischer und/oder aromatischer Kohlenwasserstoffrest mit 1 bis 10 C-Atomen
R² = H und/oder ein ggf. substituierter aliphatischer, cycloaliphatischer und/oder aromatischer Kohlenwasserstoffrest mit 1 bis 10 C-Atomen
n = 2 bis 6
m = 1 oder 2
bedeuten.

8. Verfahren zur Herstellung von alkoxysilanterminierten Polyurethanen und Weichmachersenthaltende, feuchtigkeitshärtende Dichtungs- und Klebemassen nach mindestens einem der Ansprüche 1 bis 7, dadurch gekennzeichnet, daß zu den vorgelegten Diurethanen, die aus Diolmischungen und monofunktionellen Isocyanaten unter Abreaktion im wesentlichen sämtlicher freier OH-Gruppen oder aus Diisocyanaten und monofunktionellen Alkoholen unter Abreaktion im wesentlichen sämtlicher freier NCO-Gruppen hergestellt worden sind, alkoxysilanterminierte Polyurethane, die durch Umsetzung von im wesentlichen sämtlicher freier NCO-Gruppen von NCO-terminierten Polyurethan-Prepolymeren und Alkoxysilanen hergestellt worden sind, unter Rühren zugesetzt werden, vorzugsweise bei Temperaturen von 15 bis 80 °C.

9. Verwendung von alkoxysilanterminierten Polyurethane und Diurethane enthaltende Mischungen als feuchtigkeitshärtende Dichtungsmasse und/oder Klebemasse nach mindestens einem der Ansprüche 1 bis 7, vorzugsweise als Fugendichtungsmasse, ggf. unter Mitverwendung von üblichen Zusatzstoffen wie Pigmenten, Füllstoffen und/oder Härtungskatalysatoren.

## Claims

1. Moisture-curing sealing and/or adhesive compounds capable of application at room temperature containing
- alkoxysilane-terminated polyurethanes prepared by substantially complete reaction of the free NCO groups of isocyanate-terminated polyurethane prepolymers with alkoxysilanes containing NCO-reactive groups and
- as plasticizers diurethanes produced from
a) diol mixtures and monofunctional isocyanates with substantially complete reaction of the free OH groups or
b) diisocyanates and monofunctional alcohols with substantially complete reaction of the free NCO groups.

2. Sealing and adhesive compounds as claimed in claim 1, characterized in that they contain alkoxysilane-terminated polyurethanes in quantities of 20 to 50% by weight and preferably in quantities of 25 to 45% by weight and diurethanes in quantities of 5 to 50% by weight and preferably in quantities of 10 to 40% by weight and also other typical additives in quantities of 0 to 75% by weight and preferably 10 to 80% by weight, based on the particular compound.

3. Sealing and adhesive compounds as claimed in claim 1 or 2, characterized in that they contain as plasticizers diurethanes which have been produced from
a) linear diol mixtures containing polypropylene glycol with an average molecular weight of 1000 to 6000 in quantities of more than 50% by weight and preferably more than 70% by weight and aromatic and/or aliphatic monoisocyanates or
b) linear monoalcohol mixtures containing polypropylene glycol monoalkyl ethers with an average molecular weight of 500 to 2000 in quantities of more than 50% by weight and preferably in quantities of more than 70% by weight and aromatic and/or aliphatic diisocyanates.

4. Sealing and adhesive compounds as claimed in any of claims 1 to 3, characterized in that the alkoxysilane-terminated polyurethanes present have been produced by reaction of alkoxysilanes with NCO-terminated polyurethane prepolymers having an average NCO functionality of at least 2 obtained from OH-terminated polyol mixtures and diisocyanates.

5. Sealing and adhesive compounds as claimed in any of claims 1 to 3, characterized in that the alkoxysilane-terminated polyurethanes present have been produced by reaction of alkoxysilanes and NCO-terminated polyurethane prepolymers having an average NCO functionality of at least 1 and less than 2 obtained by
a) reaction of OH-terminated polyol mixtures with diisocyanates to NCO-terminated polyurethane prepolymers having an average NCO functionality of at least 2 and partial reaction of the NCO groups with linear or branched aliphatic monofunctional alcohols containing 1 to 18 carbon atoms and/or monoalkyl polyether alcohols to form a polyurethane prepolymer having an average NCO functionality of at least 1 and less than 2 or
a') reaction of OH-terminated polyol mixtures with a mixture of mono- and diisocyanates to form NCO-terminated polyurethane prepolymers having an average NCO functionality of at least 1 and less than 2.

6. Sealing and adhesive compounds as claimed in any of claims 1 to 5, characterized in that the NCO-terminated polyurethane prepolymers have been produced from linear OH-terminated polyol mixtures which at least partly contain polypropylene glycol having an average molecular weight of 1000 to 6000, preferably in quantities of more than 50% by weight.

7. Sealing and adhesive compounds as claimed in any of claims 1 to 6, characterized in that they contain alkoxysilane-terminated polyurethanes prepared by reaction of substantially all the free NCO groups of the NCO-terminated polyurethane prepolymers with alkoxysilanes corresponding to the following general formula 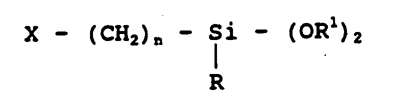 in which
X = SH, NHR², 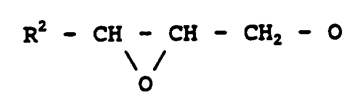 and/or (NH - CH₂ - CH₂)ₘ - NHR²
R = - CH₃, - CH₂H₅ and/or OR¹
R¹ = an optionally substituted aliphatic, cycloaliphatic and/or aromatic hydrocarbon radical containing 1 to 10 carbon atoms
R² = H and/or an optionally substituted aliphatic, cycloaliphatic and/or aromatic hydrocarbon radical containing 1 to 10 carbon atoms
n = 2 to 6
m = 1 or 2.

8. A process for the production of the moisture-curing sealing and/or adhesive compounds containing alkoxysilane-terminated polyurethanes and plasticizers claimed in at least one of claims 1 to 7, characterized in that alkoxysilane-terminated polyurethanes which have been prepared by reaction of substantially all the free NCO groups of NCO-terminated polyurethane prepolymers and alkoxysilanes are added with stirring, preferably at temperatures of 15 to 80°C, to the diurethanes which have been prepared from diol mixtures and monofunctional isocyanates with substantially all the free OH groups reacting off or from diisocyanates and monofunctional alcohols with substantially all the free NCO groups reacting off.

9. The use of mixtures containing alkoxysilane-terminated polyurethanes and diurethanes as the moisture-curing sealing compounds and/or adhesive compounds claimed in at least one of claims 1 to 7, preferably as joint sealing compounds, optionally using typical additives, such as pigments, fillers and/or curing catalysts.

## Revendications

1. Matières d'étanchéification et/ou adhésives durcissant à l'humidité, applicables à la température ambiante, contenant
- des polyuréthannes à terminaison alcoxysilane préparés par mise en réaction essentiellement complète des groupes NCO libres de prépolymères de polyuréthanne à terminaison isocyanate avec des alcoxysilanes contenant des groupes réactifs vis-à-vis de groupes NCO, et
- des diuréthannes comme plastifiants préparés
a) à partir de mélanges de diols et d'isocyanates monofonctionnels avec réaction essentiellement complète des groupes OH libres, ou
b) à partir de diisocyanates et d'alcools monofonctionnels avec réaction essentiellement complète des groupes NCO libres.

2. Matières d'étanchéification et adhésives selon la revendication 1, caractérisées en ce qu'elles contiennent des polyuréthannes à terminaison alcoxysilane dans des quantités de 20 à 50% en poids, de préférence de 25 à 45% en poids et des diuréthannes dans des quantités de 5 à 50% en poids, de préférence de 10 à 40% en poids, ainsi que d'autres additifs habituels dans des quantités de 0 à 75% en poids, de préférence de 10 à 80% en poids - chaque fois rapportées à la matière d'utilisation -.

3. Matières étanchéification et adhésives selon l'une quelconque des revendications 1 ou 2, caractérisées en ce qu'elles contiennent, comme plastifiants, des diuréthannes qui ont été préparés
a) à partir de mélanges de diols linéaires, qui contiennent du polypropylèneglycol ayant un poids moléculaire moyen de 1000 à 6000 dans des quantités supérieures à 50% en poids, de préférence supérieures à 70% en poids, et de monoisocyanates aromatiques et/ou aliphatiques, ou
b) à partir de mélanges de monoalcools linéaires, qui contiennent des éthers monoalkyliques de polypropylèneglycol ayant un poids moléculaire moyen de 500 à 2000 dans des quantités supérieures à 50% en poids, de préférence supérieures à 70% en poids, et de diisocyanates aromatiques et/ou aliphatiques.

4. Matières d'étanchéification et adhésives selon l'une quelconque des revendications 1 à 3, caractérisées en ce que les polyuréthannes présents à terminaison alcoxysilane ont été préparés par mise en réaction d'alcoxysilanes avec des prépolymères de polyuréthanne à terminaison NCO ayant une fonctionnalité NCO moyenne d'au moins 2, obtenus à partir de mélanges de polyols à terminaison OH et de diisocyanates.

5. Matières d'étanchéification et adhésives selon l'une quelconque des revendications 1 à 3, caractérisées en ce que les polyuréthannes présents à terminaison alcoxysilane ont été préparés par mise en réaction d'alcoxysilanes et de prépolymères de polyuréthanne à terminaison NCO ayant une fonctionnalité NCO moyenne d'au moins 1 et inférieure à 2, obtenus à partir
a) de la mise en réaction de mélanges de polyols à terminaison OH avec des diisocyanates pour obtenir des prépolymères de polyuréthanne à terminaison NCO ayant une fonctionnalité NCO moyenne d'au moins 2 et par mise en réaction d'une partie des groupes NCO avec des alcools monofonctionnels aliphatiques linéaires ou ramifiés contenant de 1 à 18 atomes de carbone, et/ou des polyétheralcools monoalkyliques pour obtenir un prépolymère de polyuréthanne ayant une fonctionnalité NCO moyenne d'au moins 1 et inférieure à 2, ou
a') de la mise en réaction de mélanges de polyols à terminaison OH avec un mélange de mono- et de diisocyanates pour obtenir des prépolymères de polyuréthanne à terminaison NCO ayant une fonctionnalité NCO moyenne d'au moins l et inférieure à 2.

6. Matières d'étanchéification et adhésives selon l'une quelconque des revendications 1 à 5, caractérisées en ce que les prépolymères de polyuréthanne à terminaison NCO ont été préparés à partir de mélanges de polyols linéaires à terminaison OH qui contiennent, au moins pour une part, du polypropylèneglycol ayant un poids moléculaire moyen de 1000 à 6000 de préférence dans des quantités supérieures à 50% en poids.

7. Matières d'étanchéification et adhésives selon l'une quelconque des revendications 1 à 6, caractérisées en ce qu'elles contiennent des polyuréthannes à terminaison alcoxysilane préparés par mise en réaction d'essentiellement tous les groupes NCO libres des prépolymères de polyuréthanne à terminaison NCO avec des alcoxysilanes répondant à la formule générale 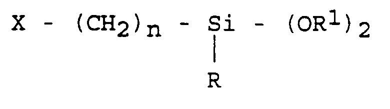 dans laquelle
X = SH, NHR², 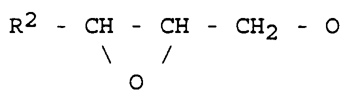 et/ou (NH - CH₂ - CH₂)ₘ - NHR²,
R = -CH₃, -CH₂H₅ et/ou OR¹,
R¹ = un radical d'hydrocarbure aliphatique, cycloaliphatique et/ou aromatique éventuellement substitué contenant de 1 à 10 atomes de carbone,
R² = H et/ou un radical d'hydrocarbure aliphatique, cycloaliphatique et/ou aromatique éventuellement substitué contenant de 1 à 10 atomes de carbone,
n = 2 à 6,
m = 1 ou 2.

8. Procédé pour la préparation de matières d'étanchéification et adhésives durcissant à l'humidité, contenant des polyuréthannes à terminaison alcoxysilane et des plastifiants, selon au moins l'une des revendications 1 à 7, caractérisé en ce que, aux diuréthannes déposés au préalable, qui ont été préparés à partir de mélanges de diols et d'isocyanates monofonctionnels avec mise en réaction d'essentiellement tous les groupes OH libres ou à partir de diisocyanates et d'alcools monofonctionnels avec mise en réaction d'essentiellement tous les groupes NCO libres, tout en agitant, on ajoute des polyuréthannes à terminaison alcoxysilane, qui ont été préparés par mise en réaction d'essentiellement tous les groupes NCO libres de prépolymères de polyuréthanne à terminaison NCO et d'alcoxysilanes, de préférence à des températures de 15 à 80°C.

9. Utilisation de mélanges contenant des polyuréthannes à terminaison alcoxysilane et des diuréthannes, comme matières d'étanchéification et/ou comme matières adhésives durcissant à l'humidité, selon au moins l'une des revendications 1 à 7, de préférence comme matières de remplissage des joints éventuellement en utilisant de manière conjointe des additifs habituels tels que des pigments, des matières de charge et/ou des catalyseurs du durcissement.
